# EUROPEAN PATENT APPLICATION

(11) **EP 4 718 196 A1**
(43) Date of publication of application: **01.04.2026**
(21) Application number: 25196357.5
(22) Date of filing: 18.08.2025
(51) Int. Cl.: G05D 1/224, G05D 1/698, G05D 107/70, G05D 109/10

(54) **INFORMATION PROCESSING APPARATUS, INFORMATION PROCESSING METHOD, AND INFORMATION PROCESSING PROGRAM**

(30) Priority: 25.09.2024 JP 2024166669
(71) Applicant: Yokogawa Electric Corporation, Tokyo 180-8750 (JP)
(72) Inventor: Hara, Akari, Tokyo, 180-8750 (JP); Tanigawa, Youhei, Tokyo, 180-8750 (JP); Sakurai, Yasuki, Tokyo, 180-8750 (JP)
(74) Representative: Hoffmann Eitle

(57) **Abstract**

Provided is an information processing apparatus including: an information acquisition unit which acquires position information regarding a position of each of a plurality of moving bodies and state information regarding a state of each of the plurality of moving bodies in a real space in which the plurality of moving bodies move; a reception unit which receives designation of a measurement position of measurement target information that is information of a measurement target in the real space on a virtual map corresponding to the real space; and a determination unit which determines a moving body of the moving bodies to move to the measurement position, based on the measurement position, and the position information and the state information of each of the plurality of moving bodies.

## Description

### BACKGROUND

### 1. TECHNICAL FIELD

The present invention relates to an information processing apparatus, an information processing method, and an information processing program.

### 2. RELATED ART

Patent Document 1 describes "an autonomous moving body including an autonomous control unit for moving autonomously" (claim 1).

Patent Document 2 describes "to improve the efficiency of a management job related to a moving body or a user thereof." (abstract).

### Prior Art Documents

### Patent Documents

Patent Document 1: International Publication No. 2019/181896
Patent Document 2: Japanese Patent Application Publication No. 2022-180688

### SUMMARY

In a first aspect of the present invention, an information processing apparatus is provided. The information processing apparatus includes: an information acquisition unit which acquires position information regarding a position of each of a plurality of moving bodies and state information regarding a state of each of the plurality of moving bodies in a real space in which the plurality of moving bodies move; a reception unit which receives designation of a measurement position of measurement target information that is information of a measurement target in the real space on a virtual map corresponding to the real space; and a determination unit which determines a moving body of the moving bodies to move to the measurement position, based on the measurement position, and the position information and the state information of each of the plurality of moving bodies. The moving body may include a target acquisition unit. The target acquisition unit may be a sensor that measures a physical quantity of a target. The physical quantity of the target may include a humidity, a concentration of a gas, or a radiation dose in a vicinity of a structure body in the real space. The information acquisition unit may be an imaging unit that images the measurement target information. The imaging unit may acquire a position, a shape, and a size of the structure body or an obstacle that obstructs movement of the moving body, based on an image acquired in a state where the moving body could not move. The state of the moving body may include a moving state of the moving body. The moving state may include at least one of a moving speed or a moving acceleration. The state of the moving body may be a remaining amount of a storage battery of the moving body.

The determination unit may determine the moving body to move to the measurement position, based on a type of the measurement target information and a type of measurable information that is information measurable by each of the moving bodies. The determination unit may calculate a movable distance of the moving body based on the remaining amount of the moving body. The determination unit may determine, as the moving body to move to the measurement position, the moving body in which the movable distance of the moving body is equal to or longer than a distance of a planned movement route to the measurement position.

In any of the above information processing apparatuses, the determination unit may determine the moving body to move to the measurement position, based on moving performance of each of the moving bodies and characteristic information of an assumed movement route along which each of the moving bodies moves from an initial position to the measurement position.

In any of the above information processing apparatuses, a measurement deadline of the measurement target information at the measurement position may be determined in advance. The determination unit may determine a moving body of the moving bodies satisfying the measurement deadline as the moving body to move to the measurement position.

In any of the above information processing apparatuses, in a case where acquisition of a first type of the measurement target information by a first moving body of the plurality of moving bodies and acquisition of a second type of the measurement target information by a second moving body of the plurality of moving bodies are to be performed jointly at the measurement position, the determination unit may determine each of the first moving body and the second moving body as the moving body to move to the measurement position.

In any of the above information processing apparatuses, the determination unit may determine an order in which the first moving body and the second moving body reach the measurement position, based on a position where a first sensor which acquires the measurement target information in the first moving body is provided and a position where a second sensor which acquires the measurement target information in the second moving body is provided. The determination unit may determine an order in which the first moving body and the second moving body reach the measurement position, based on heights at which the first target acquisition unit and the second target acquisition unit are provided.

Any of the above information processing apparatuses may further include a storage unit which stores a role determined in advance for each of the moving bodies and a measurement target in the real space to be measured by the moving body with reserve power in association with each other. The determination unit may judge whether the moving body has the reserve power after the moving body completes the role, and in a case where it is judged that the moving body has the reserve power, may determine the moving body judged to have the reserve power as a moving body of the moving bodies to move to a position of the measurement target to be measured with reserve power.

In any of the above information processing apparatuses, the storage unit may update the measurement target to be stored, according to the measurement target information.

In any of the above information processing apparatuses, the determination unit may judge a state of the measurement target according to the measurement target information. The information acquisition unit may acquire acquisition time when the moving body has acquired the measurement target information related to judgement of the measurement target by the determination unit. The determination unit may determine movement time when the moving body moves to the measurement position again, based on the state of the measurement target and the acquisition time.

In any of the above information processing apparatuses, the determination unit may judge a state of the measurement target according to the measurement target information, and may determine a number of the moving bodies to head toward the measurement position, based on the state judged by the determination unit.

In any of the above information processing apparatuses, the information acquisition unit may acquire weather information of the real space. The determination unit may determine the moving body to move to the measurement position, based on the measurement position, the position information and the state information of each of the plurality of moving bodies, and the weather information.

In a second aspect of the present invention, an information processing method is provided. The information processing method includes: acquiring information by acquiring position information regarding a position of each of a plurality of moving bodies and state information regarding a state of each of the plurality of moving bodies in a real space in which the plurality of moving bodies move; receiving designation of a measurement position of measurement target information that is information of a measurement target in the real space on a virtual map corresponding to the real space; and determining a moving body of the moving bodies to move to the measurement position, based on the measurement position, and the position information and the state information of each of the plurality of moving bodies.

In a third aspect of the present invention, an information processing program is provided. The information processing program causes a computer to execute the information processing method.

The summary clause does not necessarily describe all necessary features of the embodiments of the present invention. In addition, the invention may also be a sub-combination of the features described above.

### BRIEF DESCRIPTION OF THE DRAWINGS

Fig. 1 is a schematic top view illustrating an example of a real space 110 in which a plurality of moving bodies 90 move.
Fig. 2 is a perspective view illustrating an example of a virtual map 120 corresponding to the real space 110.
Fig. 3 is a block diagram illustrating an example of an information processing apparatus 100.
Fig. 4 is a diagram illustrating an example of a display mode of a display unit 60.
Fig. 5 is a diagram illustrating an example of a positional relationship of a plurality of moving bodies 90 in the real space 110.
Fig. 6 is a diagram illustrating an example of a type of a structure body 114.
Fig. 7 is a diagram illustrating an example of a role predetermined for each of the plurality of moving bodies 90 and measurement targets to be measured by each moving body 90 with reserve power.
Fig. 8 is a diagram illustrating an example of abnormality occurrence time ts, recovery time te, and recovery duration T in each of a plurality of structure bodies 114.
Fig. 9 is a diagram illustrating an example of a state of the measurement target.
Fig. 10 is a flowchart illustrating an example of an information processing method according to an embodiment of the present invention.
Fig. 11 is a diagram illustrating an example of a configuration of a computer 1200 in which a plurality of aspects of the present invention may be entirely or partially embodied.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solution of the invention.

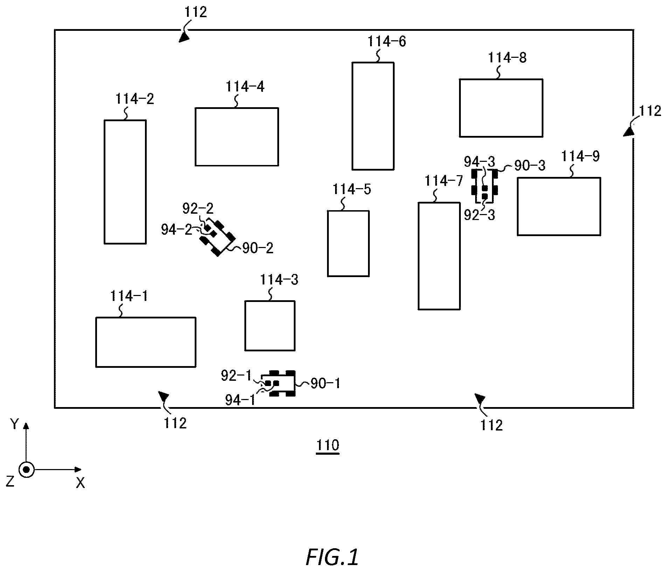

Fig. 1 is a schematic top view illustrating an example of a real space 110 in which a plurality of moving bodies 90 move. In the example of Fig. 1, the plurality of moving bodies 90 are moving bodies 90-1 to 90-3. The real space 110 is, for example, a space such as a plant. The real space 110 may be an indoor space or an outdoor space. The real space 110 may be a space that is difficult for humans to enter, such as a space where entry is highly dangerous due to environmental effects such as radiation or harmful gases or a space where entry itself is difficult due to the presence of obstacles or the like.

In the real space 110, a road surface 112 may be disposed, and a structure body 114 may be provided. In a case where the real space 110 is a space such as a plant, the road surface 112 is a floor surface of the plant. The structure body 114 is, for example, an apparatus such as an instrument, a manufacturing apparatus, a fixture, or the like. The moving body 90 may travel on the road surface 112 or may fly in the air.

The moving body 90 may be a robot that can autonomously travel, or may be a robot that can be remotely controlled by a user of an information processing apparatus 100 (described later). The moving body 90 may include a control unit that controls the movement of the moving body 90. The moving body 90 may move by the power of a storage battery or may move by an energy source other than the storage battery. The storage battery may be mounted on the moving body 90. The moving body 90 may be a quadruped robot that moves while being in contact with the road surface 112, may be a caterpillar type or wheel type robot, or may be a drone that moves in the air. The moving body 90 may be a robot that patrols the real space 110.

Each of the plurality of moving bodies 90 may include a target acquisition unit 92 that acquires measurement target information. In the example of Fig. 1, the moving bodies 90-1 to 90-3 include target acquisition units 92-1 to 92-3, respectively. The measurement target information is information of a measurement target in the real space 110. The target acquisition unit 92 may be a sensor that measures a physical quantity of a target. The physical quantity of the target may include a humidity, a concentration of a specific gas (for example, carbon dioxide or the like), or a radiation dose in a vicinity of the structure body 114 in the real space 110. A range of the vicinity of the structure body 114 may be determined in advance for each structure body 114 and for each type of the physical quantity of the target.

The target acquisition unit 92 may be an imaging unit that images the measurement target information. The imaging unit acquires the measurement target information by imaging the measurement target information. An image obtained by imaging the real space 110 can include information regarding a physical quantity of a target in the real space 110. The physical quantity of the target is, for example, a position, a shape, a gradient, a width, or a temperature of the road surface 112, a state of the road surface 112, presence or absence of an obstacle on the road surface 112, a position, a shape, or a size of the structure body 114, or the like. The position of the target may be a relative position between a plurality of targets, may be a relative position with respect to a set reference position, or may be an absolute position such as latitude and longitude.

The state of the road surface 112 may be arrangement of irregularities on the road surface 112, may be presence or absence of cracks or the like, may be a state of whether or not the road surface 112 is wet, or may be presence or absence of foreign matter such as sand on the road surface 112. The obstacle on the road surface 112 may refer to an object larger than a preset size (for example, at least one of a width, a depth, or a height), or may refer to an object due to the presence of which the moving body 90 was prevented from moving. The imaging unit may acquire physical quantities such as the position, shape, and size of the structure body 114 or the obstacle that obstructs the movement of the moving body 90, based on an image acquired in a state where the moving body 90 could not move.

The structure body 114 may be an apparatus for processing a substance. Processing the substance refers to changing a state of the substance. Changing the state of the substance may refer to changing a shape of the substance or changing at least one of properties or a chemical formula of the substance by a chemical reaction or the like. In a case where the structure body 114 is an apparatus for processing the substance, a housing of the structure body 114 may be provided with a meter or the like showing a physical quantity regarding the processing of the substance. For example, in a case where the structure body 114 is an apparatus (for example, a nuclear reactor) that changes the state of the substance while flowing a fluid, the structure body 114 may be provided with a flow meter that measures a flow rate of the fluid. The housing of the structure body 114 may be provided with a meter or the like showing the flow rate measured by the flow meter. For example, in a case where the structure body 114 is an apparatus that changes the state of the substance by using a specific type of gas (for example, toxic gas), the structure body 114 may be provided with a flow meter that measures a flow rate of the gas, a pressure gauge that measures a pressure of the gas, or the like. The housing of the structure body 114 may be provided with a meter or the like showing the flow rate, the pressure, or the like measured by the flow meter, the pressure gauge, or the like.

The structure body 114 may be an apparatus that generates an electromagnetic wave. The structure body 114 that generates an electromagnetic wave is, for example, an apparatus that generates radiation, an apparatus that generates light having wavelengths of ultraviolet light to infrared light, or the like. For example, in a case where the structure body 114 is an apparatus that generates radiation (for example, an X-ray diffraction apparatus), the structure body 114 that generates an electromagnetic wave may be provided with a power meter showing radiation output. The housing of the structure body 114 may be provided with a meter or the like showing the radiation output measured by the power meter.

In a case where the target acquisition unit 92 is an imaging unit, the imaging unit may acquire the measurement target information by acquiring an image obtained by imaging the meter or the like provided in the housing of the structure body 114.

The plurality of moving bodies 90 may include a position information acquisition unit 94 that acquires a place of the moving body 90 in the real space 110. The position information acquisition unit 94 is, for example, a global positioning system (GPS). In the example of Fig. 1, the moving bodies 90-1 to 90-3 include position information acquisition units 94-1 to 94-3, respectively.

In the present specification, technical matters may be described by using orthogonal coordinate axes of an X axis, a Y axis, and a Z axis. In the present specification, a plane parallel to the road surface 112 is defined as an XY plane, and a direction perpendicular to the road surface 112 is defined as a Z-axis direction. In the present specification, an arbitrary direction in the XY plane is defined as an X-axis direction, and a direction orthogonal to the X axis in the XY plane is defined as a Y-axis direction. The Z-axis direction may be a direction parallel to a vertical direction, and the XY plane may be a horizontal plane.

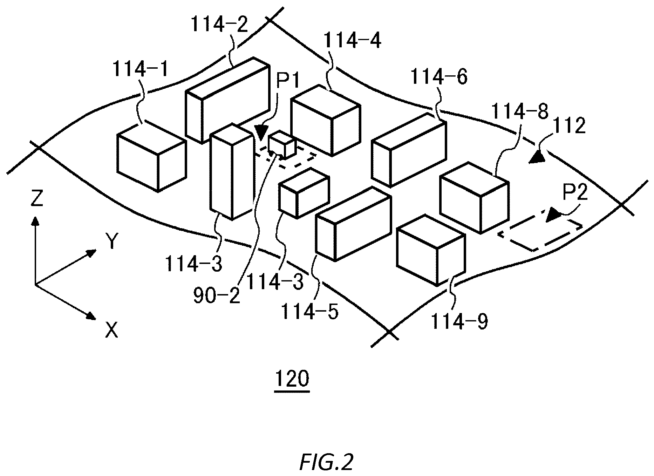

Fig. 2 is a perspective view illustrating an example of a virtual map 120 corresponding to the real space 110. The virtual map 120 of this example is three-dimensional. The virtual map 120 may be a two-dimensional map having the X-axis direction and the Y-axis direction. The virtual map 120 may be a map created for a purpose different from displaying the measurement target information. The virtual map 120 may be an existing map or may be a map created based on map information acquired by the moving body 90. The existing map is, for example, CAD data when the real space 110 is constructed, a Google map, or the like. The map created based on the map information acquired by the moving body 90 is, for example, a map created by a simultaneous localization and mapping (SLAM) technology or the like. Fig. 2 illustrates a region of the virtual map 120 corresponding to the real space 110. The road surface 112 and the structure body 114 of the real space 110 are illustrated on the virtual map 120.

The virtual map 120 may include an initial position P1 of the movement of the moving body 90. The virtual map 120 may include a measurement position P2 of the measurement target information. In Fig. 2, an example of the initial position P1 is indicated by a broken line, and an example of the measurement position P2 is indicated by an alternate long and short dash line. In Fig. 2, illustration of the moving bodies 90-1 and 90-3 in Fig. 1 is omitted. The measurement position P2 is a position of a movement destination to which the moving body 90 is to move or a position to which the moving body 90 preferably moves in order for the target acquisition unit 92 of the moving body 90 to acquire the measurement target information. The movement destination to which the moving body 90 is to move is, for example, a position of a measurement target (for example, the structure body 114) of which a state is to be checked. An operator 130 (described later) may designate the measurement position P2 by a reception unit 30 (described later).

The initial position P1 is a position where the moving body 90 starts to move. The position where the moving body 90 starts to move is a stop position of the moving body 90 in a case where the moving body 90 is stopped. The case where the moving body 90 is stopped may refer to a case where the moving body 90 is stopped after completing a designated role, or may refer to a case where the moving body 90 is temporarily stopped while the moving body 90 is executing the designated role. In a case where the moving body 90 is moving, and the moving body 90 is designated as the moving body 90 that moves to the measurement position P2, the position where the moving body 90 starts to move may be a current position of the moving body 90 when designated.

The position information acquisition unit 94 of the moving body 90 may acquire the initial position P1. An information acquisition unit 20 (described later) may acquire the initial position P1 acquired by the position information acquisition unit 94. A display unit 60 (described later) may display, on the virtual map 120, the initial position P1 acquired by the information acquisition unit 20.

The initial position P1 and the measurement position P2 each may be a region having a predetermined area or volume in the real space 110. The region having the predetermined area may be a region on the road surface 112. In a case where the moving body 90 is a drone, the initial position P1 and the measurement position P2 each may be a region on a space having a predetermined volume in the real space 110. The region on the space having the predetermined volume is, for example, a space of one or more rooms provided in the real space 110.

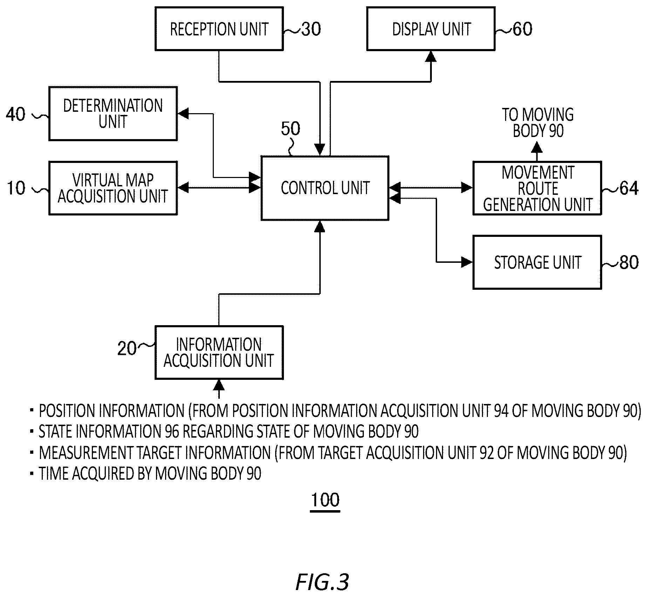

Fig. 3 is a block diagram illustrating an example of the information processing apparatus 100. The information processing apparatus 100 includes the information acquisition unit 20, the reception unit 30, a determination unit 40, and a control unit 50. The reception unit 30 is, for example, a mouse, a keyboard, a screen of a smartphone, or the like. The information processing apparatus 100 may include a virtual map acquisition unit 10, the display unit 60, a movement route generation unit 64, and a storage unit 80. The display unit 60 is, for example, a display, a monitor, a screen of a smartphone, or the like.

A part or the whole of the information processing apparatus 100 may be realized by a computer. The control unit 50 may be a central processing unit (CPU) of the computer. In a case where the information processing apparatus 100 is realized by a computer, an information processing program for causing the computer to function as the information processing apparatus 100 may be installed in the computer, or an information processing program for causing an information processing method to be described later to be executed may be installed in the computer.

The virtual map acquisition unit 10 acquires the virtual map 120. The virtual map acquisition unit 10 may acquire the virtual map 120 via the Internet. The storage unit 80 may store the virtual map 120 acquired by the virtual map acquisition unit 10.

The information acquisition unit 20 acquires position information regarding a position of each of the plurality of moving bodies 90 in the real space 110. The information acquisition unit 20 may acquire position information of each of the plurality of moving bodies 90, acquired by the position information acquisition unit 94 of each of the plurality of moving bodies 90. The information acquisition unit 20 may wirelessly acquire the position information acquired by the position information acquisition unit 94. The information acquisition unit 20 may acquire the position information of the moving body 90 moving in the real space 110 each time.

The information acquisition unit 20 acquires state information 96 (described later) regarding a state of each of the plurality of moving bodies 90 in the real space 110. The state of the moving body 90 refers to a property of the moving body 90 at a certain time point or a property that can change with the lapse of time. The state of the moving body 90 may include a property identifiable in terms of the appearance of the moving body 90, and may include a property that is difficult to identify. The property identifiable in terms of the appearance of the moving body 90 is, for example, the shape of the moving body 90. The information acquisition unit 20 may acquire state information 96 (described later) of the moving body 90 moving in the real space 110 each time.

The state of the moving body 90 may include a moving state of the moving body 90. The moving state of the moving body 90 is a property of change in a case where a location of the moving body 90 changes with the lapse of time. The moving state of the moving body 90 is, for example, at least one of a moving speed or a moving acceleration. The moving body 90 may include a speedometer. The information acquisition unit 20 may wirelessly acquire the speed of the moving body 90 measured by the speedometer of the moving body 90. The information acquisition unit 20 may acquire the speed of the moving body 90 and acquire a time rate of change in speed (that is, acceleration) based on the acquired speed.

In a case where the moving body 90 moves by the power of the storage battery, the state of the moving body 90 may be a remaining amount of the storage battery. The remaining amount of the storage battery may be a proportion of a current charge amount to a full charge amount of the storage battery. The state of the moving body 90 may refer to whether or not the moving body 90 is executing a role designated to the moving body 90.

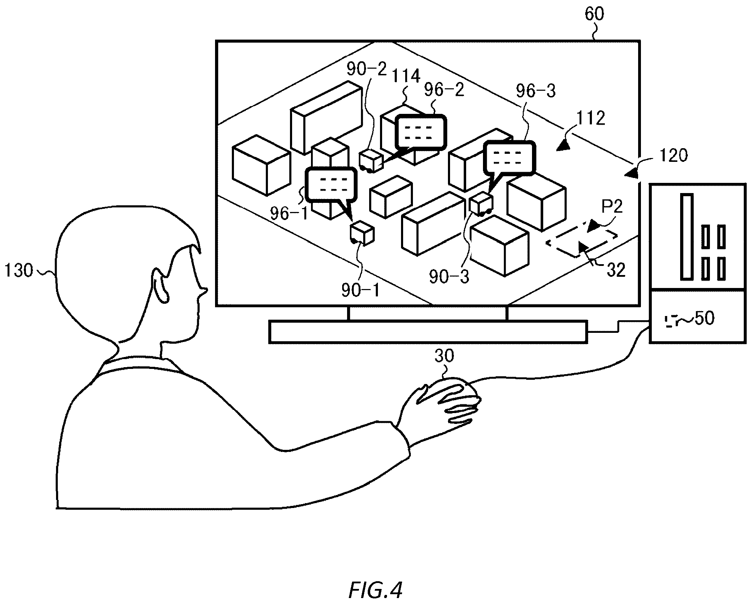

Fig. 4 is a diagram illustrating an example of a display mode of the display unit 60. The display unit 60 may display the state information 96 of each of the plurality of moving bodies 90 at a position corresponding to each position of the plurality of moving bodies 90 on the virtual map 120. In the example of Fig. 4, state information 96-1 to 96-3 are the state information 96 of the moving bodies 90-1 to 90-3, respectively. In the example of Fig. 4, the display unit 60 displays the state information 96-1 to 96-3 at positions corresponding to respective positions (see Fig. 1) of the moving bodies 90-1 to 90-3. Accordingly, the operator 130 can recognize the state of each of the plurality of moving bodies 90. In the example of Fig. 4, the state information 96 is character information indicating the state of the moving body 90. In the example of Fig. 4, the character information is shown in a speech bubble on the virtual map 120.

The reception unit 30 (see Fig. 3) receives designation of the measurement position P2 on the virtual map 120. In this example, on the virtual map 120, the operator 130 designates the measurement position P2 with a pointer 32.

The movement route generation unit 64 generates a planned movement route of the moving body 90 for each of the plurality of moving bodies 90, based on the initial position P1 and the measurement position P2. For example, the movement route generation unit 64 generates, as the planned movement route, a shortest movement route from the initial position P1 to the measurement position P2.

The determination unit 40 determines the moving body 90 to move to the measurement position P2, based on the measurement position P2 and the position information and the state information 96 of each of the plurality of moving bodies 90. For example, the determination unit 40 calculates movement duration for moving from the initial position P1 to the measurement position P2 for each of the plurality of moving bodies 90, based on the planned movement route generated by the movement route generation unit 64 and the moving speed of the moving body 90. For example, the determination unit 40 determines the moving body 90 having smallest movement duration as the moving body 90 to move to the measurement position P2. Accordingly, the moving body 90 having the smallest movement duration can move to the measurement position P2.

For example, in a case where the moving body 90 moves by the power of the storage battery, the determination unit 40 calculates a movable distance of the moving body 90 based on the remaining amount of the storage battery. For example, the determination unit 40 determines, as the moving body 90 to move to the measurement position P2, the moving body 90 in which the movable distance of the moving body 90 is equal to or longer than a distance of the planned movement route generated by the movement route generation unit 64. Accordingly, the moving body 90 can reliably reach the measurement position P2.

For example, while the moving body 90 is executing the role designated to the moving body 90, the determination unit 40 excludes the moving body 90 executing the role from the moving body 90 to move to the measurement position P2, and determines another moving body 90 excluding the moving body 90 as the moving body 90 to move to the measurement position P2. Accordingly, the moving body 90 executing the role is prevented from moving to the measurement position P2 without completing the role.

The determination unit 40 may determine the moving body 90 to move to the measurement position P2, based on a type of the measurement target information and a type of measurable information which is information measurable by each moving body 90. The information measurable by the moving body 90 refers to measurement target information that can be acquired by the target acquisition unit 92 of the moving body 90. The type of the measurable information indicates a type of information that can be acquired based on a specification of the target acquisition unit 92. For example, in a case where the target acquisition unit 92 is a gas sensor that detects a specific type of gas, the type of the measurable information is the specific type of gas. For example, in a case where the target acquisition unit 92 is a temperature/humidity sensor, the type of the measurable information is temperature or humidity.

The storage unit 80 (see Fig. 3) may store characteristic information of an assumed movement route along which the moving body 90 moves in the real space 110. The assumed movement route may be a route of the moving body 90 assumed by the operator 130. The characteristic information of the assumed movement route indicates at least one of a shape, a gradient, a width, or a state (presence or absence of irregularities or the like) of the assumed movement route, or the presence or absence of an obstacle. The characteristic information may be included in the virtual map 120. The virtual map acquisition unit 10 may acquire the virtual map 120 including the characteristic information of the assumed movement route. The storage unit 80 may store the virtual map 120 including the characteristic information.

The movement route generation unit 64 may generate the planned movement route of the moving body 90 based on moving performance of the moving body 90 and the characteristic information of the assumed movement route. The moving performance of the moving body 90 is, for example, a maximum speed of the moving body 90, a width of a route through which the moving body 90 can pass, a gradient of a route through which the moving body 90 can move, or the like. For example, the movement route generation unit 64 generates the planned movement route in which the gradient of the assumed movement route in the characteristic information is less than a maximum value of a gradient that the moving body 90 can move on. For example, the movement route generation unit 64 generates the planned movement route in which the width of the assumed movement route in the characteristic information is less than a width of a route through which the moving body 90 can pass. For example, the movement route generation unit 64 generates the planned movement route that avoids an assumed movement route in which an obstacle is present in the characteristic information. Accordingly, the moving body 90 can reliably move along the planned movement route. In the moving performance of the moving body 90, in a case where there is no planned movement route satisfying the characteristic information of the assumed movement route, the movement route generation unit 64 may not generate the planned movement route.

The movement route generation unit 64 may generate the planned movement route of the moving body 90, based on the initial position P1 of the moving body 90, the moving performance of the moving body 90, the measurement position P2, and the characteristic information of the assumed movement route. Accordingly, the moving body 90 can reliably move along the planned movement route from the initial position P1 to the measurement position P2.

The determination unit 40 may determine the moving body 90 to move to the measurement position P2, based on the moving performance of each moving body 90 and the characteristic information of the assumed movement route along which each moving body 90 moves from the initial position P1 to the measurement position P2. In a case where the movement route generation unit 64 can generate the planned movement route for all of the plurality of moving bodies 90, the determination unit 40 may determine the moving body 90 having a shortest planned movement route as the moving body 90 to move to the measurement position P2. In a case where the movement route generation unit 64 cannot generate the planned movement route for at least one specific moving body 90 (for example, the moving body 90-1), the determination unit 40 may determine at least one of other moving bodies 90 (for example, the moving bodies 90-2 or 90-3) except for the at least one moving body 90 as the moving body 90 to move to the measurement position P2. The determination unit 40 may determine, as the moving body 90 to move to the measurement position P2, the moving body 90 having a shortest planned movement route among the other moving bodies 90.

The measurement deadline of the measurement target information at the measurement position P2 may be determined in advance. The measurement deadline determined in advance may be stored in the storage unit 80. For example, in a case where a display unit indicating a physical quantity (for example, pressure, temperature, or the like) regarding processing of the substance is provided in the housing of the structure body 114, the physical quantity displayed on the display unit may change with the processing of the substance. Therefore, the display unit of the structure body 114 may display a measurement value of the physical quantity at a certain timing for a certain period and display the measurement value of the physical quantity at a next timing after the certain period has elapsed. The measurement deadline of the measurement target information is, for example, an end of the certain period.

An atomic clock may be mounted in the moving body 90. The moving body 90 may acquire time of the atomic clock. The moving body 90 may acquire the time from the NTP server via the Internet. The information acquisition unit 20 may acquire the time acquired by the moving body 90. The information acquisition unit 20 may acquire the time from the NTP server via the Internet.

The information acquisition unit 20 may acquire the moving speed of the moving body 90. The determination unit 40 may calculate duration required for the moving body 90 to move from the initial position P1 to the measurement position P2, based on the distance of the planned movement route generated by the movement route generation unit 64 and the moving speed of the moving body 90 acquired by the information acquisition unit 20. The determination unit 40 may judge whether the moving body 90 can move to the measurement position P2 by the measurement deadline, based on the calculated required duration, a current time, and the measurement deadline of the measurement target information.

The determination unit 40 may determine the moving body 90 that satisfies the measurement deadline as the moving body 90 to move to the measurement position P2. The moving body 90 that satisfies the measurement deadline is the moving body 90 judged by the determination unit 40 to be movable to the measurement position P2 by the measurement deadline.

The first moving body 90 (for example, the moving body 90-1) may include a first target acquisition unit 92 (for example, the target acquisition unit 92-1) that acquires a first type of measurement target information. The second moving body (for example, the moving body 90-2) may include a second target acquisition unit 92 (for example, the target acquisition unit 92-2) that acquires a second type of measurement target information. The first type and the second type may be different from each other, or may be the same type.

In a case where acquisition of the first type of measurement target information by the first target acquisition unit 92 and acquisition of the second type of measurement target information by the second target acquisition unit 92 are to be performed jointly at the measurement position P2, the determination unit 40 may determine the first moving body 90 and the second moving body 90 as the moving bodies to move to the measurement position P2. The case where the acquisition of the first type of measurement target information and the acquisition of the second type of measurement target information are to be performed jointly is, for example, a case where, when the structure body 114 is a radiation generation apparatus (for example, an X-ray diffraction apparatus) that generates radiation, the first type of measurement target information is radiation output and the second type of measurement target information is a temperature in a vicinity of the radiation generation apparatus. In a case where there is a possibility that an abnormality has occurred in the radiation generation apparatus, the information acquisition unit 20 may acquire both the radiation output and the temperature in the vicinity of the radiation generation apparatus, thereby obtaining knowledge regarding the abnormality. For example, in a case where the radiation output is abnormal but the temperature is normal, a radiation shielding function in the radiation generation apparatus may be abnormal. For example, in a case where the radiation output is abnormal and the temperature is abnormal, a cooling function of circulating water in the radiation generation apparatus may be abnormal. As described above, the knowledge regarding the abnormality can be obtained by acquiring different types of measurement target information. In this example, the first target acquisition unit 92 may be an imaging unit that is provided in a housing of the radiation generation apparatus and images a meter showing the radiation output, and the second target acquisition unit 92 may be a temperature sensor that measures the temperature in the vicinity of the radiation generation apparatus.

Another example of the case where the acquisition of the first type of measurement target information and the acquisition of the second type of measurement target information are to be performed jointly is, for example, a case where the first type of measurement target information and the second type of measurement target information each is a temperature in the vicinity of the structure body 114. In this example, the first target acquisition unit 92 and the second target acquisition unit 92 may be a first temperature sensor and a second temperature sensor, respectively. In a case where there is a possibility that an abnormality has occurred in the structure body 114, it may be desired to carefully measure the temperature in the vicinity of the structure body 114. In such a case, if a measurement value of the first temperature sensor and a measurement value of the second temperature sensor are within an error range, a reliability of the measured temperature is high.

In a case where the acquisition of the first type of measurement target information and the acquisition of the second type of measurement target information are to be performed jointly, the first type of measurement target information and the second type of measurement target information may be associated with each other in advance. The first type of measurement target information and the second type of measurement target information associated in advance may be stored in the storage unit 80. The determination unit 40 may judge whether or not the acquisition of the first type of measurement target information by the first target acquisition unit 92 and the acquisition of the second type of measurement target information by the second target acquisition unit 92 are to be performed jointly at the measurement position P2, based on the association between the first type and the second type stored in the storage unit 80.

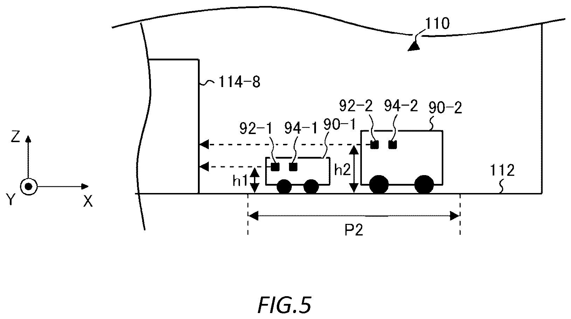

Fig. 5 is a diagram illustrating an example of a positional relationship of the plurality of moving bodies 90 in the real space 110. The determination unit 40 may determine an order in which the first moving body 90 and the second moving body 90 reach the measurement position P2, based on a position of the first target acquisition unit 92 (for example, the target acquisition unit 92-1) in the first moving body 90 (for example, the moving body 90-1 ) and a position of the second target acquisition unit 92 (for example, the target acquisition unit 92-2) in the second moving body 90 (for example, the moving body 90-2). The position of the target acquisition unit 92 may be a position of the target acquisition unit 92 with respect to a predetermined reference position in the real space 110. The predetermined reference position of the real space 110 is, for example, a position of the road surface 112 in the Z-axis direction. In the example of Fig. 5, the position of target acquisition unit 92 is a height from road surface 112. In the example of Fig. 5, the determination unit 40 determines that the moving body 90-1 reaches the measurement position P2 first and the moving body 90-2 reaches the measurement position P2 afterward, based on a height h1 of the target acquisition unit 92-1 in the moving body 90-1 and a height h2 of the target acquisition unit 92-2 in the moving body 90-2.

In this example, the height h2 is higher than the height h1. Therefore, when the moving body 90-2 stops between the moving body 90-1 and a structure body 114-8 in the X-axis direction, it may be difficult for the target acquisition unit 92-1 of the moving body 90-1 to acquire the measurement target information. Therefore, it is preferable that the moving body 90-1 stop between the moving body 90-2 and the structure body 114-8 in the X-axis direction. Therefore, the determination unit 40 determines that the moving body 90-1 having the target acquisition unit 92 with the height h1 arrives first and the moving body 90-2 having the target acquisition unit 92 with the height h2 arrives afterward. Accordingly, each of the target acquisition unit 92-1 and the target acquisition unit 92-2 can acquire the measurement target information.

In a case where the acquisition of the first type of measurement target information by the first target acquisition unit 92 and the acquisition of the second type of measurement target information by the second target acquisition unit 92 are to be performed jointly at the measurement position P2, the order in which the first moving body 90 and the second moving body 90 reach the measurement position P2 may be determined based on the position of the first target acquisition unit 92 and the position of the second target acquisition unit 92. Accordingly, the first target acquisition unit 92 can acquire the first type of measurement target information, and the second target acquisition unit 92 can acquire the second type of measurement target information.

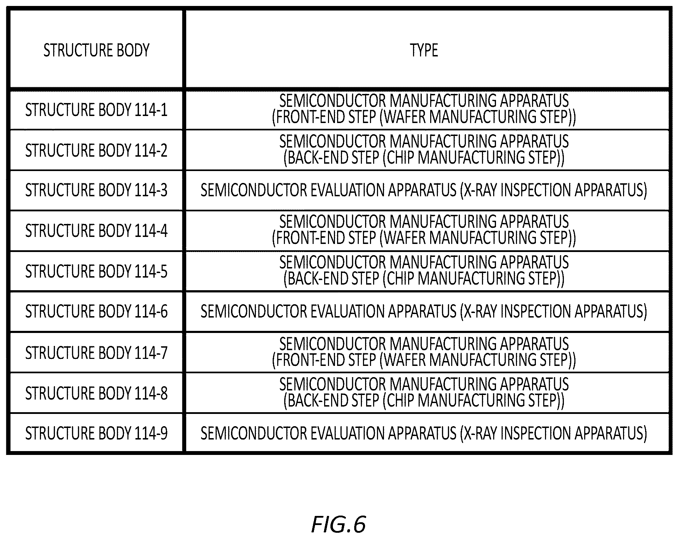

Fig. 6 is a diagram illustrating an example of a type of the structure body 114. In this example, a structure body 114-1, a structure body 114-4, and a structure body 114-7 are semiconductor manufacturing apparatuses (front-end steps). The front-end steps may include steps of cleaning a wafer, photolithography (transfer onto the wafer), etching, film formation, and ion implantation. In this example, a structure body 114-2, a structure body 114-5, and a structure body 114-8 are semiconductor manufacturing apparatuses (back-end steps). The back-end steps may include steps of dicing, die bonding, wire bonding, and molding (protection by packaging). In this example, a structure body 114-3, a structure body 114-6, and a structure body 114-9 are semiconductor evaluation apparatuses. The semiconductor evaluation apparatuses of this example include an X-ray inspection apparatus. In the semiconductor evaluation apparatuses of this example, a state of wire bonding is evaluated by an X-ray image.

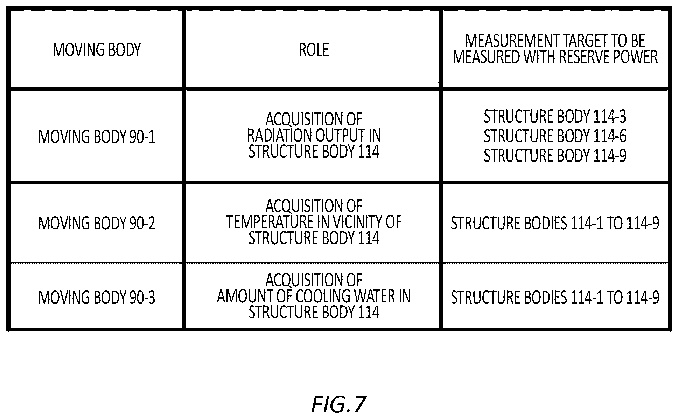

Fig. 7 is a diagram illustrating an example of a role predetermined for each of the plurality of moving bodies 90 and measurement targets to be measured by each of the moving bodies 90 with reserve power. In this example, the role of the moving body 90-1 is to acquire the radiation output in the structure body 114, the role of the moving body 90-2 is to acquire the temperature in the vicinity of the structure body 114, and the role of the moving body 90-3 is to acquire an amount of cooling water in the structure body 114. Association between each role and the measurement target to be measured with reserve power illustrated in Fig. 7 may be stored in the storage unit 80.

In this example, in a case where the moving body 90-1 acquires the radiation output in any one structure body 114 of the structure body 114-3, the structure body 114-6, or the structure body 114-9, the measurement target to be measured by the moving body 90-1 with reserve power is another structure body 114 of the structure body 114-3, the structure body 114-6, or the structure body 114-9. In this example, in a case where the moving body 90-2 acquires the temperature in the vicinity of any one structure body 114 of the structure bodies 114-1 to 114-9, the measurement target to be measured by the moving body 90-2 with reserve power is another structure body 114 of the structure bodies 114-1 to 114-9. In this example, in a case where the moving body 90-3 acquires the amount of cooling water in any one structure body 114 of the structure bodies 114-1 to 114-9, the measurement target to be measured by the moving body 90-3 with reserve power is the amount of cooling water in another structure body 114 of the structure bodies 114-1 to 114-9.

After the moving body 90 completes the role, the determination unit 40 may judge whether the moving body 90 has reserve power. For example, after the moving body 90-1 acquires the radiation output of the structure body 114-3, the determination unit 40 judges whether the moving body 90-1 has reserve power. The state information of the moving body 90 may include information regarding presence or absence of reserve power of the moving body 90. For example, the determination unit 40 calculates the movable distance of the moving body 90-1, based on the remaining amount of the storage battery after the moving body 90-1 acquires the radiation output of the structure body 114-3. The movement route generation unit 64 generates a planned movement route from the structure body 114-3 to the structure body 114-6 or the structure body 114-9. In a case where a distance of the planned movement route is less than the movable distance, the determination unit 40 judges that the moving body 90-1 has reserve power. The determination unit 40 may deactivate the role of the moving body 90 after the moving body 90 completes the role.

In a case where it is judged that the moving body 90 has reserve power, the determination unit 40 may determine the moving body 90 judged to have reserve power, as the moving body 90 to move to a position of the measurement target to be measured with reserve power. For example, in a case where the determination unit 40 judges that the moving body 90-1 has reserve power, the determination unit judges the moving body 90-1 as the moving body to move to the position of the structure body 114-6 or the structure body 114-9.

The storage unit 80 may update the measurement target to be measured by the moving body 90 with reserve power, according to the measurement target information. A threshold may be determined in advance for the measurement target information. For example, in a case where the measurement target information is greater or less than the threshold, the storage unit 80 may update the measurement target to be measured by the moving body 90 with reserve power. For example, in the example of Fig. 7, in a case where a temperature in a vicinity of the structure body 114-1 acquired by the moving body 90-2 is higher than a threshold temperature, there is a possibility that an abnormality has occurred in the structure body 114-1. In such a case, after a time point when the moving body 90-2 acquires that the temperature in the vicinity of the structure body 114-1 is higher than the threshold temperature, acquiring the temperature in the vicinity of the structure body 114-1 again becomes less meaningful. Therefore, the storage unit 80 may exclude the structure body 114-1 from the measurement target to be measured by the moving body 90-2 with reserve power. For example, in the example of Fig. 7, in a case where an amount of water in the structure body 114-2 acquired by the moving body 90-3 is less than a threshold amount of water, there is a possibility that an abnormality caused by a shortage of the amount of water has occurred in the structure body 114-2. In such a case, after a time point when the moving body 90-3 acquires that the amount of water in the structure body 114-2 is less than the threshold amount of water, acquiring the amount of water in the structure body 114-2 again becomes less meaningful. Therefore, the storage unit 80 may exclude the structure body 114-2 from the measurement target to be measured by the moving body 90-3 with reserve power.

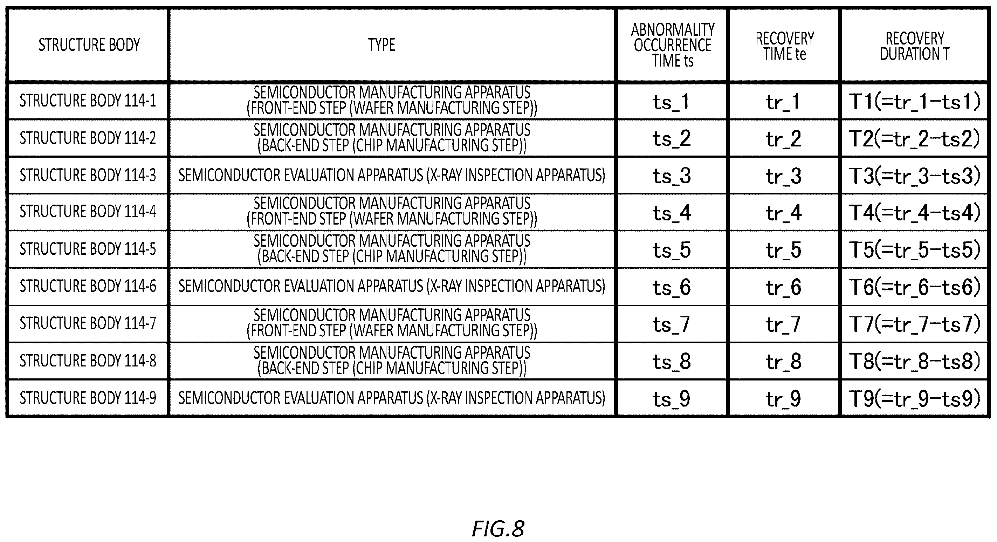

Fig. 8 is a diagram illustrating an example of abnormality occurrence time ts, recovery time te, and recovery duration T in each of the plurality of structure bodies 114. The abnormality occurrence time ts is time when an abnormality occurs in the structure body 114. The recovery time te is time when the structure body 114 is recovered from the abnormality. The recovery duration T is duration from the abnormality occurrence time ts to the recovery time te.

In this example, it is assumed that the role of the moving body 90-1 in Fig. 7 is to acquire the radiation dose in the vicinity of the structure body 114. The determination unit 40 may judge a state of the measurement target according to the measurement target information. For example, in a case where the measurement target information is the radiation dose, the target acquisition unit 92-1 of the moving body 90-1 acquires the dose. The target acquisition unit 92-1 may be a dosimeter. The determination unit 40 judges a state in the vicinity of the radiation generation apparatus according to a magnitude of the radiation dose. The determination unit 40 may judge whether the state of the measurement target is abnormal or normal, according to the measurement target information. For example, in a case where the magnitude of the radiation dose is greater than a threshold dose, there is a high probability that the radiation is leaking around the structure body 114. Therefore, the determination unit 40 judges that an abnormality in the dose occurs around structure body 114. In a case where the radiation dose in the vicinity of the structure body 114 decreases with the lapse of time and becomes less than the threshold dose, the determination unit 40 judges that a state in the vicinity of the structure body 114 has recovered from the abnormality. The storage unit 80 may store the abnormality occurrence time ts, the recovery time te, and the recovery duration T of each of the plurality of structure bodies 114 illustrated in Fig. 8.

The information acquisition unit 20 may acquire acquisition time when the target acquisition unit 92 has acquired the measurement target information related to the judgement of the measurement target by the determination unit 40. The measurement target information related to the judgement of the measurement target by the determination unit 40 is, for example, a radiation dose in the vicinity of the radiation generation apparatus in a case where the determination unit 40 judges the state in the vicinity of the radiation generation apparatus according to the magnitude of the radiation dose. The acquisition time when the target acquisition unit 92 has acquired the measurement target information related to the judgement of the measurement target is, for example, the time when the target acquisition unit 92 has acquired radiation with a dose exceeding the threshold in a case where the radiation dose has changed from a state equal to or less than the threshold to a state greater than the threshold. The time is the abnormality occurrence time ts illustrated in Fig. 8. In another example, the acquisition time when the target acquisition unit 92 has acquired the measurement target information related to the judgement of the measurement target is the time when the target acquisition unit 92 has acquired radiation with the dose of the threshold in a case where the radiation dose has changed from a state greater than the threshold to a state equal to or less than the threshold. The time is the recovery time te illustrated in Fig. 8.

The determination unit 40 may determine the movement time when the moving body 90 moves to the measurement position P2 again, based on the state of the measurement target and the acquisition time when the target acquisition unit 92 has acquired the measurement target information related to the judgement of the measurement target. The measurement position P2 is the structure body 114 in which the determination unit 40 has judged the state of the measurement target. The determination unit 40 may determine the movement time when the moving body 90 moves to the measurement position P2 again, based on the state of the measurement target, the abnormality occurrence time ts, and the recovery time te. For example, in a case where the measurement target is in an abnormal state, the determination unit 40 may determine the movement time when the moving body 90 moves to the measurement position P2 again after the time when the recovery duration T has elapsed from the abnormality occurrence time ts. The moving body 90 may move to the measurement position P2 again at the movement time determined by the determination unit 40. The target acquisition unit 92 of the moving body 90 that has moved to the measurement position P2 again may acquire the measurement target information again. The determination unit 40 may judge a state of the measurement target according to the measurement target information. In a case where the determination unit 40 judges that the state of the measurement target is normal, the operator 130 can confirm that the state of the measurement target is normal.

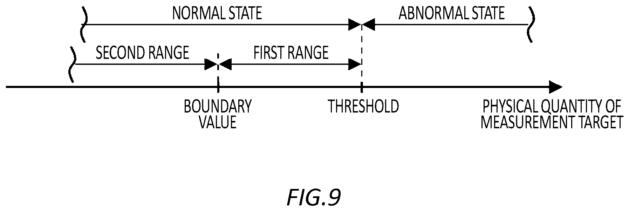

Fig. 9 is a diagram illustrating an example of the state of the measurement target. The determination unit 40 may judge the state of the measurement target according to the measurement target information, and determine the number of moving bodies 90 to head toward the measurement position P2, based on the judged state. For example, in a case where the measurement target information is the radiation dose, when the magnitude of the radiation dose is greater than the threshold dose, the determination unit 40 judges that the dose in the vicinity of the structure body 114 (radiation generation apparatus) is abnormal. In a case where the magnitude of the radiation dose is equal to or less than the threshold dose, the determination unit 40 judges that the dose in the vicinity of the structure body 114 (radiation generation apparatus) is normal. In the example of Fig. 7, the determination unit 40 judges that an abnormality in dose has occurred, based on the dose acquired by the target acquisition unit 92-1 of the moving body 90-1.

In a case where the dose is judged to be abnormal, the determination unit 40 determines the number of the moving bodies 90 to head toward the measurement position P2 (a position of the radiation generation apparatus) to be 0, for example. That is, the determination unit 40 determines that none of the moving bodies 90 are to head toward the measurement position P2. In the example of Fig. 7, the determination unit 40 determines that neither the moving body 90-2 nor the moving body 90-3 is to head toward the measurement position P2. In a case where the dose in the vicinity of the structure body 114 (radiation generation apparatus) is abnormal, there is a high probability that radiation is leaking around the structure body 114. Therefore, there is a possibility that an abnormality has occurred in the structure body 114. Therefore, the determination unit 40 may determine that neither the moving body 90-2 nor the moving body 90-3 is to head toward the measurement position P2.

In a case where the dose is judged to be normal, the determination unit 40 determines the number of the moving bodies 90 to head toward the measurement position P2 (the position of the radiation generation apparatus) to be two or more, for example. In the example of Fig. 7, the determination unit 40 determines that the moving body 90-2 and the moving body 90-3 are to head toward the measurement position P2. Accordingly, the operator 130 can monitor the temperature in the vicinity of the structure body 114 and the amount of cooling water while confirming the dose is normal.

In a state where the dose is normal, a plurality of ranges may be determined in advance. In the example of Fig. 9, a first range and a second range are determined. The first range is a range greater than a boundary value and equal to or less than the threshold. The second range is a range equal to or less than the boundary value. The boundary value is less than the threshold.

In a case where the dose is judged to be normal, the determination unit 40 may determine the number of moving bodies 90 to head toward the measurement position P2, based on the dose. For example, in a case where the dose is in the first range, the determination unit 40 determines that the number of moving bodies 90 to head toward the measurement position P2 is two or more. The first range is closer to an abnormal state than the second range. Therefore, the determination unit 40 determines that the number of moving bodies 90 to head toward the measurement position P2 is two or more. Accordingly, the operator 130 can closely monitor the structure body 114. For example, in a case where the dose is in the second range, the determination unit 40 determines that the number of moving bodies 90 to head toward the measurement position P2 is one. The second range is farther from the abnormal state than the first range. Therefore, there is a high probability that a degree of the normal state around the structure body 114 is higher than that in the case of the first range. Therefore, the determination unit 40 may determine the number of moving bodies 90 to head toward the measurement position P2 as one.

The information acquisition unit 20 may acquire weather information of the real space 110. The target acquisition unit 92 of the moving body 90 may detect a water droplet in the real space 110. The target acquisition unit 92 may be a water detection sensor. The information acquisition unit 20 may judge and acquire the weather information of the real space 110 based on a detection result of the water droplet by the target acquisition unit 92. In a case where the target acquisition unit 92 detects the water droplet, the information acquisition unit 20 may judge that weather in the real space 110 is rainy. In a case where the target acquisition unit 92 detects no water droplet, the information acquisition unit 20 may judge that the weather in the real space 110 is cloudy or fine. The information acquisition unit 20 may acquire the weather information for the position of the real space 110 via the Internet. The position of the real space 110 may be a position represented by coordinates of latitude and longitude.

The determination unit 40 may determine the moving body 90 to move to the measurement position P2, based on the measurement position P2, the position information and the state information of each of the plurality of moving bodies 90, and the weather information of the real space 110. For example, in a case where the measurement target information is the radiation dose, a spatial dose rate in rainy weather is likely to be higher than a spatial dose rate in cloudy or fine weather. In this example, the spatial dose rate is a dose per unit time measured in the real space 110. Therefore, in the example of Fig. 7, in a case where the weather in the real space 110 is judged to be rainy, the determination unit 40 may not determine the moving body 90-1 as the moving body 90 to move to the measurement position P2. In a case where the weather in the real space 110 is judged to be cloudy or fine, the determination unit 40 may determine the moving body 90-1 as the moving body 90 to move to the measurement position P2.

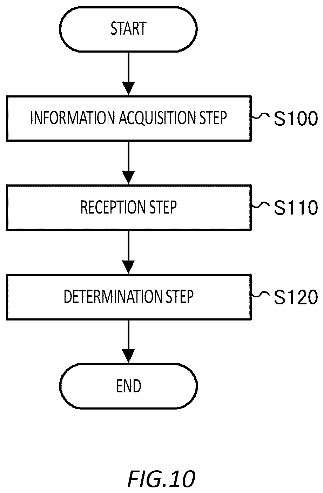

Fig. 10 is a flowchart illustrating an example of an information processing method according to an embodiment of the present invention. The information processing method according to the embodiment of the present invention will be described using the information processing apparatus 100 illustrated in Fig. 3 as an example. The information processing method includes an information acquisition step S100, a reception step S102, and a determination step S104.

The information acquisition step S100 is a step in which the information acquisition unit 20 acquires the position information regarding the position of each of the plurality of moving bodies 90 and the state information regarding the state of each of the plurality of moving bodies 90 in the real space 110 in which the plurality of moving bodies move. The reception step S102 is a step in which the reception unit 30 receives designation of the measurement position P2 of the measurement target information, which is the information on the measurement target in the real space 110, on the virtual map 120 corresponding to the real space 110. The determination step S104 is a step in which the determination unit 40 determines the moving body 90 to move to the measurement position P2, based on the measurement position and the position information and the state information of each of the plurality of moving bodies 90.

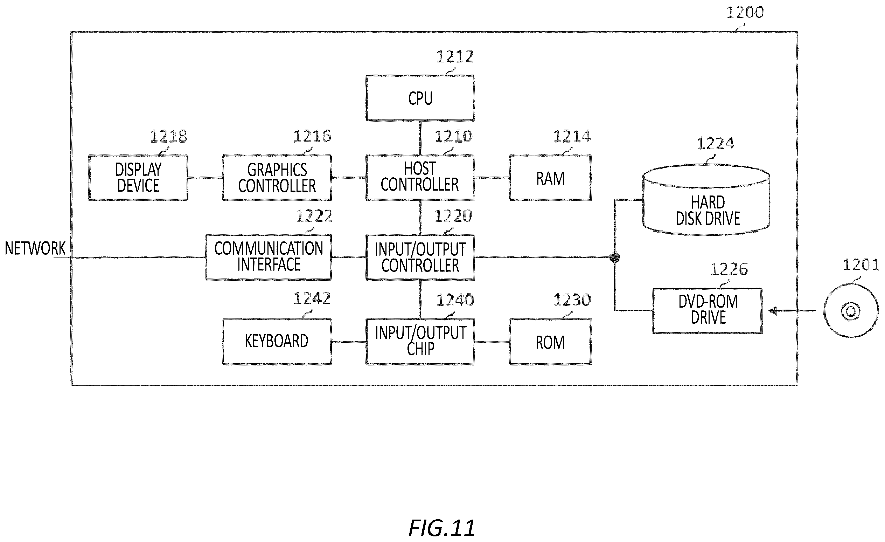

Fig. 11 is a diagram illustrating an example of a configuration of a computer 1200 in which a plurality of aspects of the present invention may be entirely or partially embodied. A program installed on the computer 1200 can cause the computer 1200 to function as an operation associated with an apparatus according to embodiments of the present invention or as one or more "unit(s)" of the apparatus, or to perform the operation or the one or more "unit(s)", and/or can cause the computer 1200 to perform processes according to embodiments of the present invention or steps of the processes. Such a program may be executed by a CPU 1212 to cause the computer 1200 to perform particular operations associated with some or all blocks in the flowcharts or block diagrams described herein. Processes according to embodiments of the present invention or steps of the processes may also be performed on a cloud network or the like.

The computer 1200 according to the present embodiment includes a CPU 1212, a RAM 1214, a graphics controller 1216 and a display device 1218, which are connected to each other by a host controller 1210. The computer 1200 also includes input/output units such as a communication interface 1222, a hard disk drive 1224, a DVD-ROM drive 1226 and an IC card drive, which are connected to the host controller 1210 via an input/output controller 1220. The computer also includes legacy input/output units such as a ROM 1230 and a keyboard 1242, which are connected to the input/output controller 1220 via an input/output chip 1240.

The CPU 1212 operates in accordance with programs stored in the ROM 1230 and the RAM 1214, and controls each unit accordingly. The graphics controller 1216 acquires image data generated by the CPU 1212 on a frame buffer or the like provided in the RAM 1214 or in the graphics controller 1216 itself, and displays the image data on the display device 1218.

The communication interface 1222 communicates with other electronic devices via a network. The hard disk drive 1224 stores programs and data to be used by the CPU 1212 in the computer 1200. The DVD-ROM drive 1226 reads programs or data from the DVD-ROM 1201, and provides the programs or data to the hard disk drive 1224 via the RAM 1214. The IC card drive reads the program and data from an IC card, and/or writes the program and data to the IC card.

The ROM 1230 has stored therein a boot program or the like to be executed by the computer 1200 at the time of activation, and/or a program that depends on the hardware of the computer 1200. The input/output chip 1240 may also connect various input/output units to the input/output controller 1220 via a parallel port, a serial port, a keyboard port, a mouse port or the like.

Programs are provided by a computer-readable storage medium such as the DVD-ROM 1201 or an IC card. The programs are read from the computer-readable storage medium, installed on the hard disk drive 1224, the RAM 1214 or the ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, if communication is made between the computer 1200 and external devices, the CPU 1212 may execute a communication program loaded on the RAM 1214, and instruct the communication interface 1222 to perform communication processing based on the processing described in the communication program. Under the control of the CPU 1212, the communication interface 1222 reads transmission data stored in a transmission buffer region provided in a recording medium such as the RAM 1214, the hard disk drive 1224, the DVD-ROM 1201 or an IC card, and sends the read transmission data to the network, or writes reception data received from the network into a reception buffer region or the like provided in the recording medium.

The CPU 1212 may also make all or required portions of the files or databases stored in an external recording medium such as the hard disk drive 1224, the DVD-ROM drive 1226 (DVD-ROM 1201) or an IC card to be read by the RAM 1214, and perform various types of processing on the data on the RAM 1214. Next, the CPU 1212 may write the processed data back into the external recording medium.

Various types of information such as various types of programs, data, tables and databases may be stored in the recording medium for information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search the plurality of entries for an entry whose attribute value of the first attribute matches a designated condition, read the attribute value of the second attribute stored in the entry, and thereby acquire the attribute value of the second attribute associated with the first attribute that meets a predetermined condition.

The programs or software modules in the above description may be stored on the computer 1200 or a computer-readable storage medium near the computer 1200. Further, a recording medium such as a hard disk or a RAM provided in a server system connected to a dedicated communication network or the Internet can be used as a computer-readable storage media, which provides programs to the computer 1200 via the network.

While the present invention has been described by way of the embodiments, the technical scope of the present invention is not limited to the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

10: virtual map acquisition unit; 20: information acquisition unit; 30: reception unit; 32: pointer; 40: determination unit; 50: control unit; 60: display unit; 64: movement route generation unit; 80: storage unit; 90: moving body; 92: target acquisition unit; 94: position information acquisition unit; 96: state information; 100: information processing apparatus; 110: real space; 112: road surface; 114: structure body; 120: virtual map; 130: operator; 1200: computer; 1201: DVD-ROM; 1210: host controller; 1212: CPU; 1214: RAM; 1216: graphics controller; 1218: display device; 1220: input/output controller; 1222: communication interface; 1224: hard disk drive; 1226: DVD-ROM drive; 1230: ROM; 1240: input/output chip; and 1242: keyboard.

## Claims

1. An information processing apparatus comprising:
an information acquisition unit which acquires position information regarding a position of each of a plurality of moving bodies and state information regarding a state of each of the plurality of moving bodies in a real space in which the plurality of moving bodies move;
a reception unit which receives designation of a measurement position of measurement target information that is information of a measurement target in the real space on a virtual map corresponding to the real space; and
a determination unit which determines a moving body of the moving bodies to move to the measurement position, based on the measurement position, and the position information and the state information of each of the plurality of moving bodies.

2. The information processing apparatus according to claim 1, wherein the determination unit determines the moving body to move to the measurement position, based on a type of the measurement target information and a type of measurable information that is information measurable by each of the moving bodies.

3. The information processing apparatus according to claim 1 or 2, wherein the determination unit determines the moving body to move to the measurement position, based on moving performance of each of the moving bodies and characteristic information of an assumed movement route along which each of the moving bodies moves from an initial position to the measurement position.

4. The information processing apparatus according to any one of claim 1 to 3, wherein
a measurement deadline of the measurement target information at the measurement position is determined in advance, and
the determination unit determines a moving body of the moving bodies satisfying the measurement deadline as the moving body to move to the measurement position.

5. The information processing apparatus according to any one of claim 1 to 4, wherein
in a case where acquisition of a first type of the measurement target information by a first moving body of the plurality of moving bodies and acquisition of a second type of the measurement target information by a second moving body of the plurality of moving bodies are to be performed jointly at the measurement position, the determination unit determines each of the first moving body and the second moving body as the moving body to move to the measurement position.

6. The information processing apparatus according to claim 5, wherein the determination unit determines an order in which the first moving body and the second moving body reach the measurement position, based on a position where a first sensor which acquires the measurement target information in the first moving body is provided and a position where a second sensor which acquires the measurement target information in the second moving body is provided.

7. The information processing apparatus according to any one of claim 1 to 6, further comprising:
a storage unit which stores a role determined in advance for each of the moving bodies and a measurement target in the real space to be measured by the moving body with reserve power in association with each other, wherein
the determination unit judges whether the moving body has the reserve power after the moving body completes the role, and in a case where it is judged that the moving body has the reserve power, determines the moving body judged to have the reserve power as a moving body of the moving bodies to move to a position of the measurement target to be measured with reserve power.

8. The information processing apparatus according to claim 7, wherein
the storage unit updates the measurement target to be stored, according to the measurement target information.

9. The information processing apparatus according to any one of claim 1 to 8, wherein
the determination unit judges a state of the measurement target according to the measurement target information,
the information acquisition unit acquires acquisition time when the moving body has acquired the measurement target information related to judgement of the measurement target by the determination unit, and
the determination unit determines movement time when the moving body moves to the measurement position again, based on the state of the measurement target and the acquisition time.

10. The information processing apparatus according to any one of claim 1 to 9, wherein
the determination unit judges a state of the measurement target according to the measurement target information, and determines a number of the moving bodies to head toward the measurement position, based on the state judged by the determination unit.

11. The information processing apparatus according to any one of claim 1 to 10, wherein
the information acquisition unit acquires weather information of the real space, and
the determination unit determines the moving body to move to the measurement position, based on the measurement position, the position information and the state information of each of the plurality of moving bodies, and the weather information.

12. An information processing method comprising:
acquiring information by acquiring position information regarding a position of each of a plurality of moving bodies and state information regarding a state of each of the plurality of moving bodies in a real space in which the plurality of moving bodies move;
receiving designation of a measurement position of measurement target information that is information of a measurement target in the real space on a virtual map corresponding to the real space; and
determining a moving body of the moving bodies to move to the measurement position, based on the measurement position, and the position information and the state information of each of the plurality of moving bodies.

13. An information processing program which causes a computer to execute the information processing method according to claim 12.
